Europäisches Patentamt

European Patent Office

Office européen des brevets

(11) Numéro de publication : **0 401 090 B1**

# (12) FASCICULE DE BREVET EUROPEEN

(45) Date de publication du fascicule du brevet :
04.11.92 Bulletin 92/45

(51) Int. Cl.⁵ : **B60J 10/04**

(21) Numéro de dépôt : **90401383.6**

(22) Date de dépôt : **23.05.90**

(54) **Joint lécheur extérieur pour vitre de véhicule automobile.**

(30) Priorité : **30.05.89 FR 8907483**

(43) Date de publication de la demande :
**05.12.90 Bulletin 90/49**

(45) Mention de la délivrance du brevet :
**04.11.92 Bulletin 92/45**

(84) Etats contractants désignés :
**DE ES GB IT**

(56) Documents cités :
**DE-A- 2 008 291**
**FR-A- 2 208 802**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Morin, Michel**
**35, rue de la Petite Fontaine, Vauhallan**
**F-91430 Igny (FR)**

(74) Mandataire : **Boivin, Claude**
**9, rue Edouard-Charton**
**F-78000 Versailles (FR)**

## Description

La présente invention concerne un ensemble comportant d'une part un joint lécheur extérieur destiné à être placé à la partie inférieure de l'encadrement d'une vitre d'une porte de véhicule automobile et, plus particulièrement, un joint lécheur de ce genre qui comporte un prolongement ou patte qui recouvre le montant de la porte, et d'autre part le moyen de fixation de ce joint sur la porte.

Le prolongement du joint doit être fixé au montant de la porte; et cette fixation est réalisée jusqu'à présent par un écrou en matière plastique dont la mise en place est difficile.

La présente invention a pour objet un ensemble du type ci-dessus qui remédie à cet inconvénient.

Cet ensemble est caractérisé en ce que ledit moyen de fixation est constitué par un embout qui peut s'emboîter dans le joint et présente un tenon pouvant s'accrocher dans un poinçonnage du montant de la porte.

Des modes de réalisation de cet ensemble sont indiqués dans les revendications dépendantes.

On a décrit ci-après, à titre d'exemple non limitatif, un mode de réalisation du joint lécheur selon l'invention, avec référence aux dessins annexés dans lesquels :

La Figure 1 est une vue en perspective d'une portion de la porte devant recevoir le joint;

La Figure 2 est une vue en perspective de l'une des extrémités du joint;

La Figure 3 représente l'embout vu en perspective par l'arrière;

La Figure 4 est une vue en élévation de l'embout;

La Figure 5 est une vue en coupe horizontale de l'embout suivant V-V de la Figure 4;

La Figure 6 est une vue en élévation montrant le joint mis en place sur la porte;

La Figure 7 est une vue en coupe suivant VII-VII de la Figure 6.

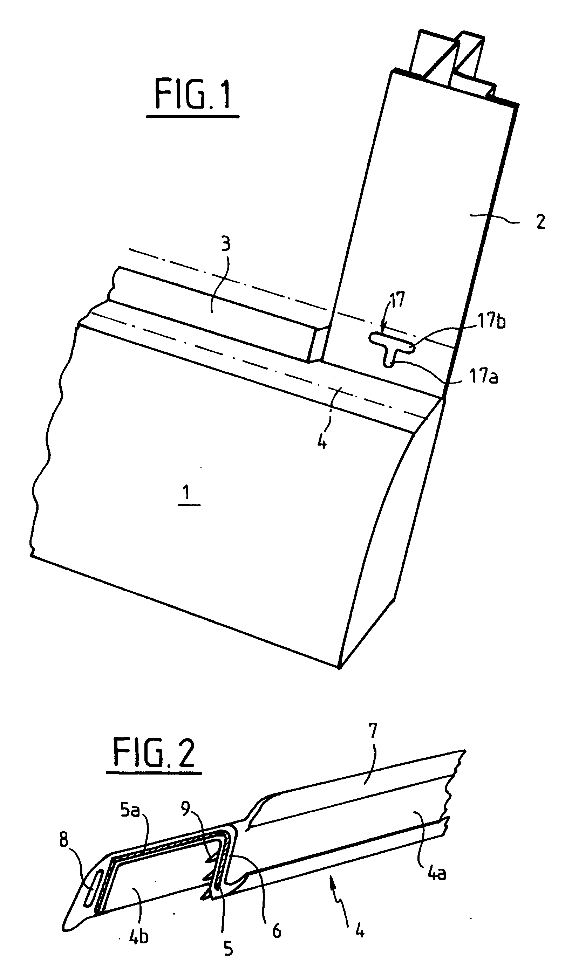

Tel qu'il est représenté au dessin, le joint lécheur de l'ensemble selon l'invention est destiné à être monté à la partie inférieure de l'encadrement de vitre d'une porte 1 de véhicule automobile, cette porte comportant de la manière usuelle un montant 2, du côté du bord latéral extérieur de la porte, et une arête 3 à la base de l'encadrement et propre à être chaussée par le joint lécheur (Figure 1).

Ce joint qui est désigné au dessin d'une façon générale par la référence 4, comprend une partie principale 4a qui constitue le joint lécheur proprement dit et, à l'une de ses extrémités une patte 4b qui n'a qu'un but ornemental et est destinée à s'appliquer sur le montant 2. L'extrémité où se trouve la patte 4b varie suivant que le joint est destiné à une porte gauche ou à une porte droite. La partie 4a du joint est constituée par une armature métallique 5 en U enrobée dans un élastomère 6. Elle présente à sa partie supérieure une lèvre d'essuyage 7 et à l'extérieur de l'armature 5, une cavité 8 s'étendant sur toute sa longueur. L'une des faces internes revêtue de l'armature 5 présente des languettes d'arrêt 9. La patte 4b du joint a une constitution en gros identique, mais l'armature 5 a été coupée selon son plan longitudinal médian de sorte qu'elle se réduit à une simple languette plane 5a, la cavité 8 se poursuivant à l'extérieur de cette languette; par contre la lèvre d'essuyage 7 n'existe plus.

Au joint lécheur 4 est associé un embout désigné d'une façon générale par la référence 10. Cet embout est en matière plastique moulée et a la forme générale d'une barrette plane 11 qui est terminée, à l'une de ses extrémités, par une languette supérieure 12 et, à son autre extrémité, par un talon 13. Ce dernier est muni d'une languette 14 s'étendant parallèlement à la barrette 11; cette languette a une longueur inférieure à celle de la patte 4b et une largeur un peu inférieure à celle de la cavité 8. Sur sa face extérieure, la barrette 11 présente un tenon 15 comportant un pied cylindrique 15a et une tête élargie 15b; ce tenon est surmonté d'un ergot d'arrêt 16.

Le montant 2 de la porte présente, à hauteur de l'arête 3, un poinçonnage en T 17 comprenant une partie verticale étroite 17a dont la largeur est sensiblement égale au diamètre du pied de tenon 15a et qui est surmontée d'une partie horizontale 17b de dimensions correspondant à celles de la tête de tenon 15b.

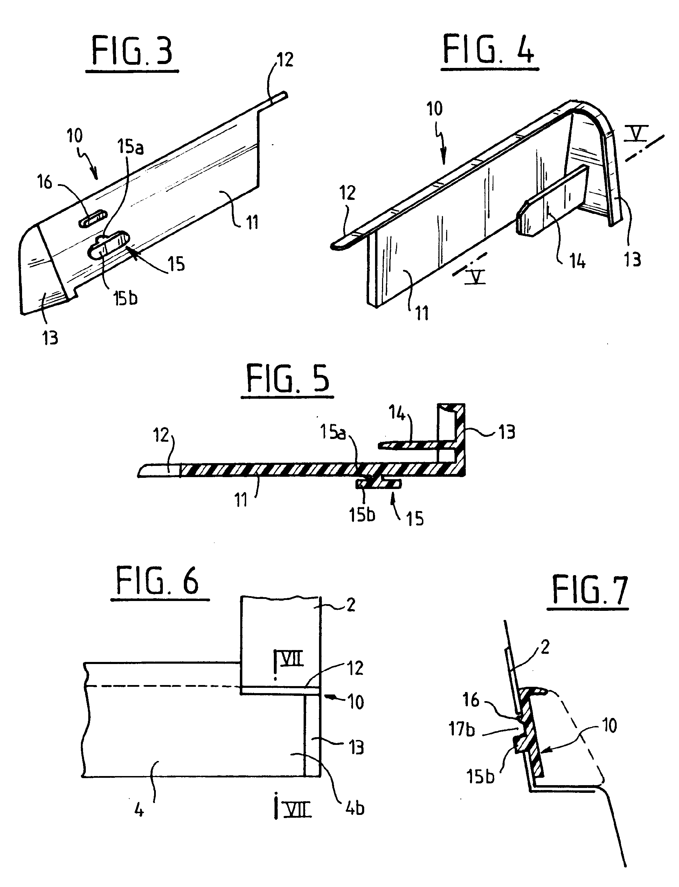

Pour monter le joint lécheur qui vient d'être décrit, on commence par le munir de l'embout 10 par emboîtage de la languette 14 dans la cavité longitudinale 8 de la patte 4b; la languette 12 vient au contact de la partie 4a du joint alors que le talon 13 s'applique sur la tranche de la patte 4b du joint. On applique ensuite l'ensemble sur la partie inférieure de l'encadrement, parallèlement à la vitre, de façon à engager la partie 15b du tenon dans la partie 17b du poinçonnage 17 du montant 2. Il ne reste plus qu'à déplacer le joint vers le bas. Il vient alors chevaucher l'arête 3 alors que le tenon 15 s'accroche dans le poinçonnage 17 et est verrouillé par l'ergot 16 (Figure 7).

## Revendications

1. Ensemble formé par d'une part un joint lécheur extérieur de la partie inférieure de l'encadrement d'une vitre de porte de véhicule automobile, comportant un prolongement enjoliveur ou patte (4b) qui recouvre le montant (2) de la porte, et d'autre part son moyen de fixation à la porte, caractérisé en ce que ledit moyen de fixation est constitué par un embout (10) qui peut s'emboîter dans le joint et présente un tenon (15) pouvant s'accrocher dans un poinçonnage (17) du montant de la porte (2).

2. Ensemble selon la revendication 1,

caractérisé en ce que le tenon (15) est surmonté d'un ergot d'arrêt (16).

3. Ensemble selon la revendication 1 ou 2, caractérisé en ce que sa partie principale (4a) est constituée par une armature métallique (5) enrobée d'élastomère qui présente à sa partie supérieure une lèvre d'essuyage (7).

4. Ensemble selon la revendication 3, caractérisé en ce qu'il présente une cavité (8) se poursuivant dans la patte (4b) et en ce que l'embout (10) présente une languette (14) pouvant s'engager dans la cavité (8) de la patte (4b).

5. Ensemble selon l'une des revendications précédentes, caractérisé en ce que l'embout (10) a la forme d'une barrette plane (11) terminée à l'une de ses extrémités par une languette supérieure (12) et à son autre extrémité par un talon (13).

6. Ensemble selon les revendications 4 et 5, caractérisé en ce que la languette (14) est attenante au talon (13).

**Patentansprüche**

1. Abstreiferbaugruppe, bestehend einerseits aus einem im unteren Teil de Fensterrahmens einer Kfz-Tür eingebauten äußeren Abstreifer, der eine verzierenden Verlängerung oder Lasche (4b) und andererseits Mittel zur Befestigung dieses Abstreifers an der Tür besitzt, dadurch gekennzeichnet, daß die Befestigungsmittel aus einem Ende (10) bestehen, das auf den Abstreifer aufgesetzt werden kann und einem Zapfen (15) besitzt, der in eine Ausstanzung (17) in der Türsäule (2) eingerastet werden kann.

2. Abstreiferbaugruppe nach Patentanspruch 1, dadurch gekennzeichnet, daß über dem Zapfen (15) ein Nippel (16) vorgesehen ist.

3. Abstreiferbaugruppe nach Patentanspruch 1 oder 2, dadurch gekennzeichnet, daß das Hauptteil (4a) des Abstreifers aus einem Metallkern (5) mit einer Elastomerverkleidung besteht, welche auf der Oberseite eine Abstreiflippe (7) aufweist.

4. Abstreiferbaugruppe nach Patentanspruch 3, dadurch gekennzeichnet, daß sie eine Aushöhlung (8) in Längsrichtung besitzt, die auch in der Lasche (4b) besteht, sowie dadurch, daß das Ende (10) eine Zunge (14) bildet, die in die Aushöhlung (8) der Lasche (4b) paßt.

5. Abstreifbaugruppe nach einem beliebigen der obigen Patentansprüche, dadurch gekennzeichnet, daß das Ende (10) die Form einer flachen Leiste (11) hat, die an ihren beiden Enden jeweils eine obere Zunge (12) und einen unteren Absatz (13) aufweist.

6. Abstreiferbaugruppe nach Patentanspruch 4 und 5, dadurch gekennzeichnet, daß die Zunge (14) an den Absatz (13) grenzt.

**Claims**

1. Unit formed by firstly one outside cleaning strip of the lower portion of the frame of a motor vehicle door window and comprising one ornamental extension or bracket (4b) covering the door pillar, and secondly its door fixing device, wherein said fixing device is formed on an end piece (10) able to be nested inside the strip and has a lug (15) able to be hooked inside a piercing (17) of the pillar of the door (2).

2. Unit according to claim 1, wherein the lug (15) is surmounted by a locking lug (16).

3. Unit according to claim 1 or 2, wherein its main portion (4a) is constituted by a metallic armature (5) coated with elastomer having at its upper portion a wiping lip (7).

4. Unit according to claim 3, wherein it has a cavity continuing into the bracket (4b) and wherein the end piece has a tongue able to be engaged inside the cavity (8) of the bracket (4b).

5. Unit according to any one of the preceding claims, wherein the end piece (10) has the shape of a flat small bar (11) ended at one of its extremities by an upper tongue (12) and at its other extremity by a lug (13).

6. Unit according to claims 4 and 5, wherein the tongue (14) is adjacent to the lug (13).

# FIG.1

2

3

17

17b

17a

4

1

# FIG.2

7

5a

9

8

4b

5

6

4

4a

# FIG. 3

# FIG. 4

# FIG. 5

# FIG. 6

# FIG. 7